# DEMANDE DE BREVET EUROPEEN

(11) **EP 4 632 344 A1**
(43) Date de publication de la demande: **15.10.2025**
(21) Numéro de dépôt: 25169216.6
(22) Date de dépôt: 08.04.2025
(51) Int. Cl.: G01L 5/24, F16B 31/02

(54) **DISPOSITIF DE CONTRÔLE DU SERRAGE D'UNE FIXATION ET PROCÉDÉ DE CONTRÔLE ASSOCIÉ**

(30) Priorité: 10.04.2024 FR 2403686
(71) Demandeur: LISI Aerospace, 75012 Paris (FR)
(72) Inventeur: REGNARD, Benoit, 75012 PARIS (FR); ROUSSEAU, Clément, 75012 PARIS (FR); DELAGE, Florent, 95310 SAINT-OUEN L AUMÔNE (FR); PAYARD, Christophe, 95310 SAINT-OUEN L AUMÔNE (FR); BROUCKE, Martial, 95310 SAINT-OUEN L AUMÔNE (FR)
(74) Mandataire: Lavoix

(57) **Abrégé**

L'invention concerne un dispositif (10) de contrôle du serrage d'une fixation (12), ledit dispositif comprenant : une tige (14), comprenant une première (22) et une seconde (26) faces planes opposées ; un organe (16) d'assemblage, apte à s'assembler à la tige ; et une sonde (18) comprenant :
- un corps de sonde (50), comprenant une face frontale (56), apte à venir au contact du fond (26) de l'empreinte axiale de la tige ; et
- un transducteur (52, 80), solidaire du corps de sonde, ledit transducteur étant apte à envoyer et/ou à recevoir des ondes ultrasonores.

La tige comporte un premier élément (29) de blocage ; et la sonde comporte un deuxième élément (62) de blocage, apte à coopérer avec ledit premier élément de blocage.

## Description

La présente invention concerne un dispositif de contrôle du serrage d'une fixation, du type comportant une tige, s'étendant selon un premier axe ; la tige comprenant un élément d'assemblage, disposé sur une première surface radiale de ladite tige ; la tige comprenant une première et une seconde faces planes, perpendiculaires au premier axe et disposées respectivement à une première et à une seconde extrémités de ladite tige ; le dispositif de contrôle comportant en outre : un organe d'assemblage, apte à s'assembler à l'élément d'assemblage de la tige pour former la fixation ; et une sonde comprenant : un corps de sonde comprenant une première face frontale, apte à venir au contact de la première ou de la seconde face plane de la tige ; et un transducteur, solidaire du corps de sonde, ledit transducteur étant apte à envoyer et/ou à recevoir des ondes ultrasonores.

L'invention s'applique particulièrement, mais de manière non limitative, au contrôle du serrage de fixations d'aéronefs.

Dans le domaine aéronautique, il est utile de connaître la tension de serrage d'une fixation installée, notamment une fixation de type vis/écrou. En particulier, il est utile de pouvoir contrôler l'évolution dans le temps de ladite tension de serrage, afin de prévoir des opérations de maintenance.

Par ailleurs, il est utile d'installer de telles fixations en appliquant une tension de serrage correspondant à une valeur cible.

Le document WO2024110510, au nom de la Demanderesse, décrit un dispositif de contrôle tel que décrit ci-dessus. Un tel dispositif de contrôle permet de définir la tension de serrage dans la fixation en analysant des ondes ultrasonores traversant ladite fixation.

Cependant, pour être efficace, la transmission des ondes ultrasonores entre la sonde et la tige se doit d'être optimale. Il est souvent nécessaire d'utiliser un couplant liquide, de type gel, à l'interface de la sonde et de la tige, ce qui complique la mise en œuvre du procédé.

Par ailleurs, dans la demande susmentionnée, la sonde est assemblée à la tige par translation axiale. Un jeu d'assemblage est nécessaire, ce qui induit une incertitude quant à la position du transducteur par rapport à l'axe de la tige.

Afin de résoudre ces problèmes, l'invention a pour objet un dispositif de contrôle du type précité, dans lequel : la tige comporte un premier élément de blocage ; et la sonde comporte un deuxième élément de blocage, apte à coopérer mécaniquement avec ledit premier élément de blocage, de sorte à bloquer un déplacement axial de la sonde par rapport à la tige et à appliquer la première face frontale du corps de sonde contre la première ou la seconde face plane de la tige.

Suivant d'autres aspects avantageux de l'invention, le dispositif de contrôle comporte l'une ou plusieurs des caractéristiques suivantes, prises isolément ou suivant toutes les combinaisons techniquement possibles :
- le dispositif de contrôle comprend en outre une couche de revêtement solide sur la première face frontale du corps de sonde, ledit revêtement étant apte à améliorer une transmission acoustique entre le corps de sonde et la tige ;
- la tige comprend une tête élargie, disposée à la première extrémité de ladite tige ;
- l'élément d'assemblage de la tige est une portion filetée, disposée à la seconde extrémité de ladite tige ; et l'organe d'assemblage est un écrou ;
- le corps de sonde s'étend selon un deuxième axe entre la première et une seconde faces frontales, chacune desdites faces frontales étant plane et perpendiculaire au deuxième axe, le transducteur étant au contact de la seconde face frontale ;
- le transducteur comprend un capteur piézoélectrique, fixé sur la seconde face frontale du corps de sonde ;
- la seconde face frontale du corps de sonde est formée par le fond d'un évidement ménagé dans le corps de sonde ;
- la sonde comporte en outre : un support tubulaire, comprenant une extrémité ouverte sur une cavité axiale ; et un ressort de compression, disposé dans ladite cavité axiale, une première et une seconde extrémités du ressort étant fixées respectivement au corps de sonde et au support tubulaire ; le corps de sonde étant mobile en translation dans la cavité axiale du support tubulaire ; et dans lequel le deuxième élément de blocage est porté par le support tubulaire ;
- la tige comporte une empreinte axiale, disposée à l'une des première et seconde extrémités de ladite tige ; la première ou la seconde face plane de la tige est formée par un fond de ladite empreinte axiale ; et le premier élément de blocage est porté par l'empreinte axiale ;
- les premier et deuxième éléments de blocage sont respectivement un taraudage et un filetage ;
- le filetage de la sonde est porté par le corps de sonde ;
- les premier et deuxième éléments de blocage comportent respectivement un cran de baïonnette et un ergot de baïonnette ;
- les premier et deuxième éléments de blocage comportent respectivement : une gorge interne, ménagée dans l'empreinte axiale de la tige ; et au moins un ergot de blocage, ménagé sur le support tubulaire de la sonde ; le support tubulaire de la sonde comprend au moins une languette flexible, la ou chaque languette flexible portant le ou l'un des ergots de blocage ; la sonde comprend en outre un manchon disposé autour du support tubulaire et apte à coulisser axialement par rapport audit support tubulaire, le manchon comprenant au moins une lumière ; et le support tubulaire et le manchon sont mobiles entre une conformation rétractée, dans laquelle l'au moins un ergot de blocage est disposé à l'intérieur du manchon, et une conformation déployée, dans laquelle le ou chaque ergot de blocage est disposé dans la ou dans l'une des lumières du manchon et en saillie radiale par rapport audit manchon ; le dispositif étant configuré de sorte que, dans la conformation déployée, le ou les ergots de blocage sont aptes à être disposés dans la gorge interne de l'empreinte axiale de la tige, de sorte à bloquer axialement la sonde dans ladite empreinte axiale ;
- la tige comprend une deuxième surface radiale externe, disposée autour du premier axe ; ladite surface radiale comprenant le premier élément de blocage et des premiers éléments anti-rotation ;
- l'extrémité ouverte du support tubulaire de la sonde comprend des deuxièmes éléments anti-rotation, aptes à coopérer mécaniquement avec les premiers éléments anti-rotation pour bloquer en rotation la tige par rapport à ladite extrémité ouverte ; et le deuxième élément de blocage comprend au moins un élément mobile radialement par rapport à ladite extrémité ouverte, entre une position bloquée, dans laquelle ledit élément mobile coopère mécaniquement avec le premier élément de blocage, et une position débloquée, dans laquelle ledit élément mobile et ledit premier élément de blocage sont à l'écart l'un de l'autre.

L'invention se rapporte en outre à un procédé de contrôle du serrage d'une fixation, mis en œuvre au moyen d'un dispositif de contrôle tel que décrit ci-dessus, ledit procédé comprenant : une phase d'assemblage, comprenant : l'assemblage de la tige et de l'organe d'assemblage avec des éléments de structure pour former la fixation, une tension de serrage étant appliquée dans la tige ; et l'assemblage du deuxième élément de blocage de la sonde avec le premier élément de blocage de la tige, de sorte à bloquer axialement la sonde par rapport à la tige et à appliquer la première face frontale du corps de sonde contre l'une des première et seconde faces planes de la tige avec une pression non nulle ; et une phase de mesure de la tension de serrage, comprenant : la génération, par le transducteur, d'ondes ultrasonores émises ; la réception, par ledit transducteur, d'ondes ultrasonores réfléchies par l'autre des première et seconde faces planes de la tige ; et le traitement des ondes ultrasonores reçues pour calculer la tension de serrage dans la tige.

Selon un mode de réalisation de l'invention, l'élément d'assemblage de la tige est une portion filetée, disposée à la seconde extrémité de ladite tige ; et l'organe d'assemblage est un écrou, et l'assemblage de la tige et de l'organe d'assemblage comprend une étape de serrage de l'écrou sur la portion filetée de la tige ; la phase de mesure de la tension de serrage est réalisée simultanément à ladite étape de serrage ; et le serrage de l'écrou est arrêté lorsqu'une valeur cible de la tension de serrage est atteinte.

L'invention apparaîtra plus clairement à la lecture de la description qui va suivre, donnée uniquement à titre d'exemple non limitatif et faite en référence aux dessins dans lesquels :
- la figure 1 représente schématiquement un dispositif de contrôle selon un premier mode de réalisation de l'invention ;
- la figure 2 est une vue en coupe d'une première variante de réalisation d'un élément du dispositif de contrôle de la figure 1 ;
- la figure 3 est une vue en coupe d'une deuxième variante de réalisation d'un élément du dispositif de contrôle de la figure 1 ;
- la figure 4 est une vue partielle, en coupe, d'un dispositif de contrôle selon un deuxième mode de réalisation de l'invention ;
- la figure 5 est une vue en coupe d'un dispositif de contrôle selon un troisième mode de réalisation de l'invention ;
- les figures 6 et 7 sont des vues partielles, en perspective, de variantes de réalisation du dispositif de contrôle de la figure 5 ; et
- la figure 8 est un logigramme illustrant des étapes d'un procédé de mise en œuvre du dispositif des figures 1 et 4-7.

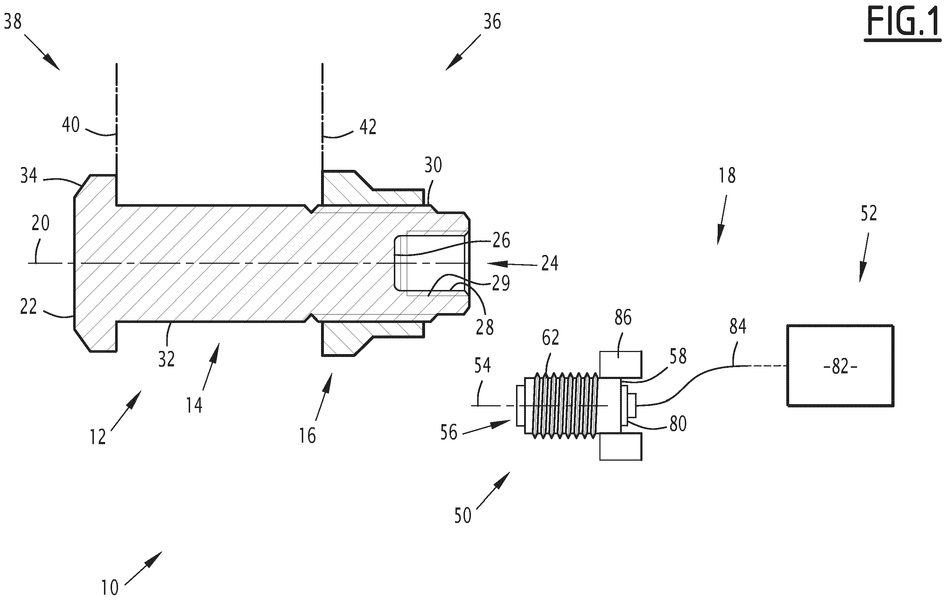

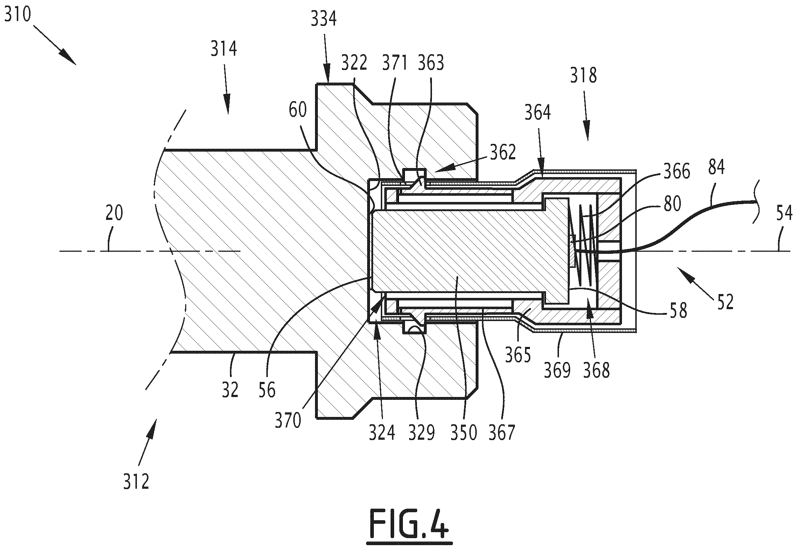

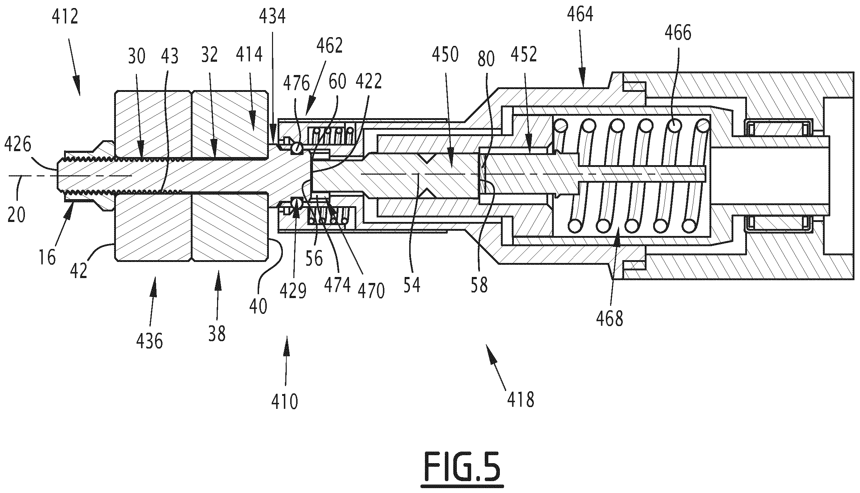

La figure 1 représente un dispositif 10 de contrôle du serrage d'une fixation 12, selon un premier mode de réalisation de l'invention. La figure 4 représente un dispositif 310 de contrôle du serrage d'une fixation 312, selon un deuxième mode de réalisation de l'invention. La figure 5 représente un dispositif 410 de contrôle du serrage d'une fixation 412, selon un troisième mode de réalisation de l'invention.

Les dispositifs 10, 310 et 410 seront décrits simultanément ci-après, les éléments communs étant désignés par les mêmes numéros de référence.

Le dispositif 10, 310, 410 comprend : une tige 14, 314, 414 ; un organe 16 d'assemblage ; et une sonde 18, 318, 418. Sur la figure 1, seuls la tige 14 et l'organe 16 d'assemblage sont représentés en coupe.

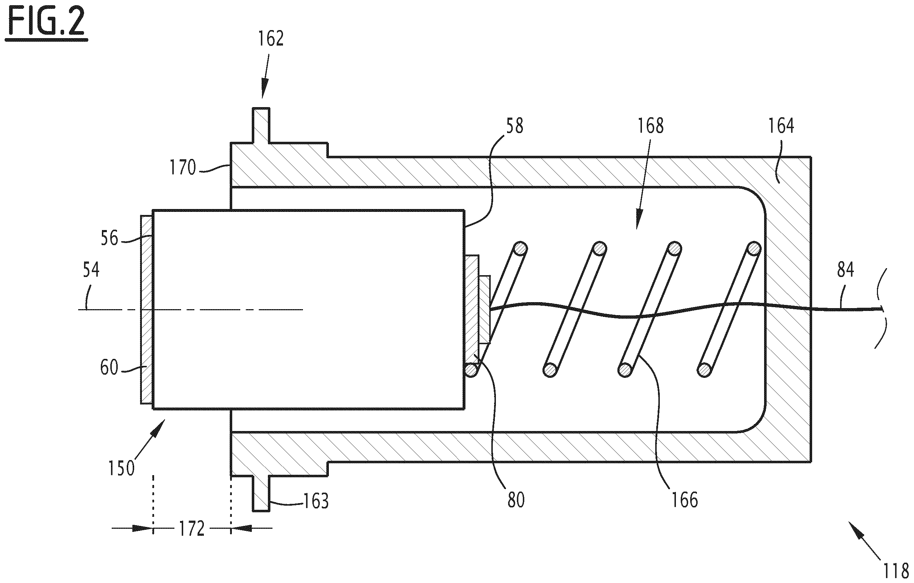

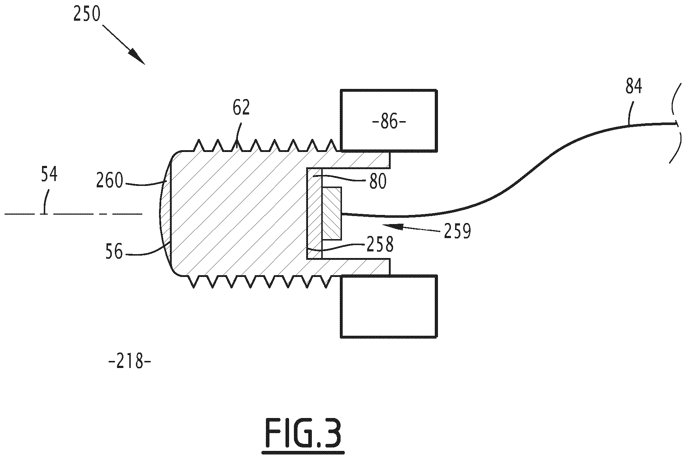

Les figures 2 et 3 sont des vues partielles, en coupe, d'une sonde 118, 218 selon d'autres modes de réalisation. Les sondes 118 et 218 sont aptes à remplacer la sonde 18 dans le dispositif 10 de la figure 1.

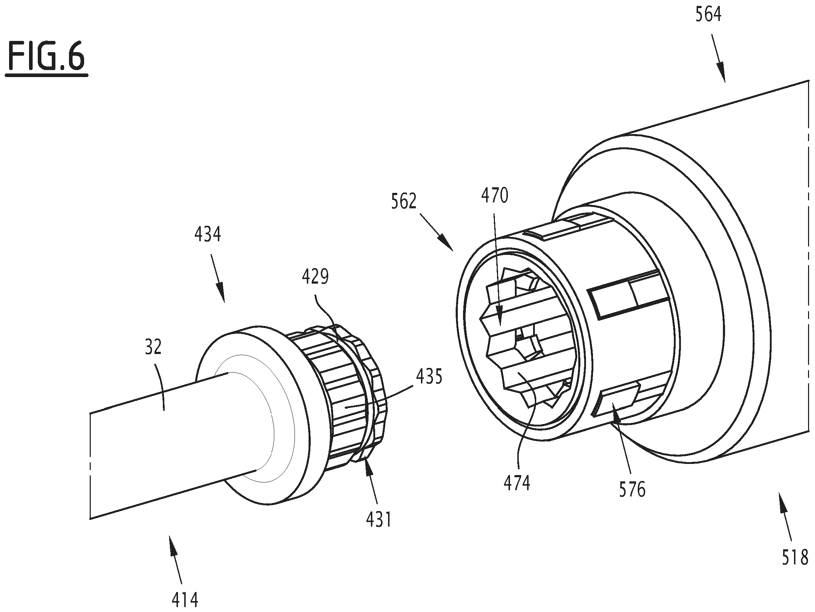

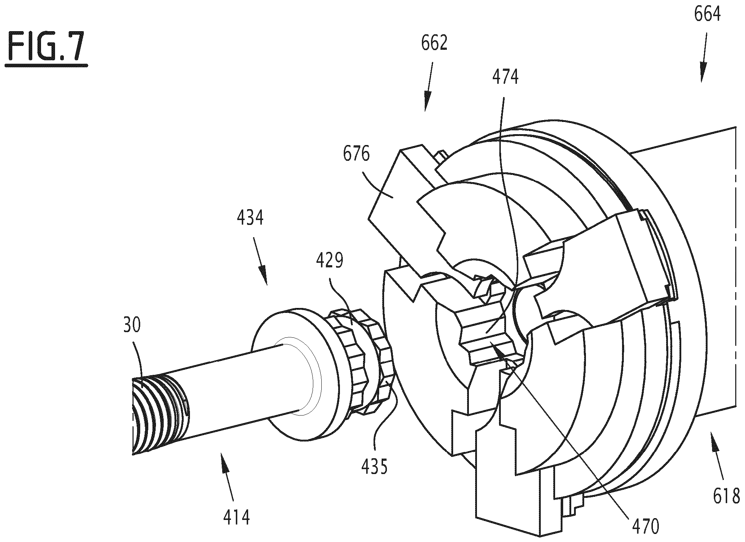

Les figures 6 et 7 montrent des sondes 518, 618 selon d'autres modes de réalisation. Les sondes 518 et 618 sont aptes à remplacer la sonde 418 dans le dispositif 410 de la figure 5. La tige 414 de la figure 5 est partiellement visible sur les figures 6 et 7.

La tige 14, 314, 414 s'étend selon un premier axe 20 entre une première et une seconde extrémités. La tige 14, 314, 414 comprend notamment un fût 32 lisse.

La tige 14, 314, 414 comprend en outre une première 22, 322, 422 et une seconde 26, 426 faces planes, perpendiculaires au premier axe 20 et disposées respectivement à la première et à la seconde extrémités de ladite tige.

Par ailleurs, la tige 14, 314, 414 comprend un premier élément de blocage 29, 329, 429 qui sera décrit plus en détail ci-après. De préférence, comme précisé ci-après, le premier élément de blocage 29, 329, 429 s'étend radialement, soit perpendiculairement au premier axe 20.

Dans les modes de réalisation représentés, la tige 14, 314, 414 comporte en outre une tête 34, 334, 434 élargie, adjacente au fût 32 lisse. La tête 34, 334, 434 forme une saillie radiale par rapport audit fût 32. Dans la description qui suit, on considère que la tête 34, 334, 434 est disposée à la première extrémité de la tige 14, 314, 414.

La tige 14, 314, 414 comprend en outre un élément 30 d'assemblage, disposé sur une première surface radiale externe de ladite tige. L'élément 30 d'assemblage est apte à coopérer avec l'organe 16 d'assemblage, de sorte à former la fixation 12, 312, 412 à partir de la tige 14, 314, 414 et de l'organe 16 d'assemblage.

Dans les modes de réalisation représentés, la tige 14, 314, 414 est une vis et l'élément d'assemblage est une portion filetée 30 de ladite vis. La portion filetée 30 est alignée avec le fût 32 lisse selon le premier axe 20. La seconde extrémité de la tige 14, 314, 414 est formée par la portion filetée 30.

Selon certains modes de réalisation, la tige 14, 314 comporte une empreinte 24, 324 axiale, disposée à l'une des première et seconde extrémités de ladite tige ; la première 322 ou la seconde 26 face plane de la tige est formée par un fond de ladite empreinte axiale ; et le premier élément 29, 329 de blocage est porté par ladite empreinte axiale.

Plus précisément, la tige 14 de la figure 1 comporte une empreinte 24 axiale disposée à la seconde extrémité, à proximité de la portion filetée 30 ; et la tige 314 de la figure 4 comporte une empreinte 324 axiale disposée à la première extrémité, au niveau de la tête 334 élargie.

L'empreinte 24, 324 comprend : un fond plan, perpendiculaire au premier axe 20 et formé par la première 322 ou par la seconde 26 face plane ; et une paroi interne 28, disposée autour du premier axe 20.

Par ailleurs, dans les modes de réalisation des figure 1 et 4, le premier élément de blocage 29, 329 est porté par l'empreinte 24, 324.

Dans le mode de réalisation de la figure 1, le premier élément de blocage 29 est un taraudage ménagé dans la paroi interne 28 de l'empreinte 24. En variante non représentée, le premier élément de blocage 29 est formé par au moins deux crans à baïonnette, ménagés dans la paroi interne 28 de l'empreinte 24 et disposés en vis-à-vis par rapport au premier axe 20.

Dans le mode de réalisation de la figure 4, le premier élément 329 de blocage est une gorge interne annulaire, ménagée dans la paroi interne 28 de l'empreinte 324 autour du premier axe 20.

Dans le mode de réalisation des figures 5 à 7, la tige 414 ne comprend pas d'empreinte axiale et une distance entre les première 422 et seconde 426 faces planes correspond à une longueur maximale de ladite tige 414 selon le premier axe 20. La seconde face plane (non représentée) de la tige 314 de la figure 4 est similaire à la seconde face plane 426 de la tige 414.

Par ailleurs, dans le mode de réalisation des figures 5 à 7, la tête 434 élargie de la tige 414 comprend une deuxième surface radiale 431 externe, disposée autour du premier axe 20 ; et ladite deuxième surface radiale 431 comprend le premier élément de blocage 429 et des premiers éléments anti-rotation 435.

Plus précisément, dans le mode de réalisation représenté, le premier élément de blocage 429 est une gorge externe annulaire, ménagée dans la deuxième surface radiale 431 autour du premier axe 20. Ladite gorge est continue. En variante, ladite gorge peut être discontinue.

De préférence, les premiers éléments anti-rotation 435 s'étendent axialement de part et d'autre de la gorge externe annulaire 429 sur la deuxième surface radiale 431. Dans le mode de réalisation représenté sur les figures 5 à 7, les premiers éléments anti-rotation 435 forment une surface d'entraînement à 12 pans pour la tête 434 élargie de la tige 414. En variantes, d'autres formes de surfaces d'entraînement peuvent être mises en œuvre.

Comme précisé ci-dessus, l'organe 16 d'assemblage est apte à s'assembler à l'élément 30 d'assemblage de la tige 14, 314, 414 pour former la fixation 12, 312, 412.

Dans le mode de réalisation représenté, l'organe 16 d'assemblage est un écrou taraudé, apte à s'assembler à la portion filetée 30 de la tige 14, 314, 414.

En particulier, la fixation 12, 312, 412 est apte à former un assemblage structurel 36, 436 avec des éléments structurels 38, superposés de manière à présenter une première 40 et une seconde 42 faces opposées. Dans l'assemblage structurel 36, 436, le fût 32 de la tige 14, 314, 414 est disposé dans un perçage 43 (figure 5) des éléments structurels 38 ; la tête 34 est en appui contre la première face 40 ; et l'écrou 16 est assemblé à la portion filetée 30 de la tige et est en appui contre la seconde face 42. Une tension de serrage est appliquée dans la tige 14, 314, 414 par le serrage de l'écrou 16.

La sonde 18, 318, 418 du dispositif 10, 310, 410 et les sondes 118, 218, 518, 618 selon des variantes de réalisation vont être décrites simultanément, les éléments communs étant désignés par les mêmes numéros de référence.

La sonde 18, 118, 218, 318, 418 comprend un corps de sonde 50, 150, 250, 350, 450 et un transducteur 52, 452. Les sondes 518 et 618 des figures 6 et 7 comprennent un corps de sonde 450 et un transducteur 452 similaires à la sonde 418 de la figure 5.

De plus, la sonde 18, 118, 218, 318, 418, 518, 618 comporte un deuxième élément de blocage 62, 162, 362, 462, 562, 662.

Le corps de sonde 50, 150, 250, 350, 450 s'étend selon un deuxième axe 54 et comporte une première 56 et une seconde 58, 258 faces frontales. Chacune desdites faces frontales 56, 58, 258 est plane et perpendiculaire au deuxième axe 54.

Dans le mode de réalisation de la figure 3, la seconde face frontale 258 forme le fond d'un évidement 259 ménagé dans le corps de sonde 250. L'évidement 259 comprend par exemple une paroi cylindrique, mais la forme de la paroi peut être différente.

De manière optionnelle, le corps de sonde 250 comprend un capot (non représenté), par exemple en matière plastique, fermant l'évidement 259.

Le corps de sonde 50, 150, 250, 350, 450 est apte à être disposé au contact de la tige 14, 314, 414, de sorte que la première face frontale 56 dudit corps de sonde soit au contact de la première 322, 422 ou de la seconde 26 face plane de ladite tige.

Plus précisément, dans le mode de réalisation des figures 1 à 4, le corps de sonde 50, 150, 250, 350 est apte à être disposé dans l'empreinte 24, 324 axiale de la tige 14, 314, de sorte que la première face frontale 56 dudit corps de sonde soit au contact du fond plan de ladite empreinte axiale, formé par la première 322 ou par la seconde 26 face plane de ladite tige.

Dans le mode de réalisation des figures 5 à 7, le corps de sonde 450 est destiné à venir au contact de la première face plane 422 de la tige 414, portée par la tête 434 élargie, comme décrit ultérieurement.

De préférence, le corps de sonde 50, 150, 250, 350, 450 comprend une couche de revêtement 60, 260 solide, déposé sur la première face frontale 56.

Comme décrit ci-après, le revêtement 60, 260 est apte à améliorer une transmission acoustique entre le corps de sonde 50, 150 et la tige 14, 314, 414. Le revêtement 60, 260 est par exemple une feuille d'étain, d'argent, de cuivre ou d'un matériau élastomère de couplage tel que l'Aqualène, développé par la société Innovation Polymers, Canada. Le revêtement 60, 260 est préférentiellement un matériau présentant une malléabilité au moins équivalente à celle de l'étain comme par exemple un élastomère de type NBR, silicone, EPDM.

Dans l'exemple des figures 1, 2, 4 et 5, le revêtement 60 est déposé sous forme d'une couche sensiblement plane sur la première face frontale 56. Dans l'exemple de la figure 3, le revêtement 260 est déposé de sorte à présenter une forme bombée. Le revêtement 260 peut être utilisé en lieu et place du revêtement 60.

Le deuxième élément de blocage 62, 162, 362, 462, 562, 662 de la sonde 18, 118, 218, 318, 418, 518, 618 est apte à coopérer avec le premier élément de blocage 29, 329, 429 de la tige 14, 314, 414, de sorte à bloquer un déplacement axial de ladite sonde par rapport à ladite tige. Avantageusement, le deuxième élément de blocage 62, 162, 362, 462, 562, 662 s'étend radialement, soit perpendiculairement au deuxième axe 54.

Plus précisément, les premier 29, 329, 429 et deuxième 62, 162, 362, 462, 562, 662 élément de blocage sont aptes à coopérer l'un avec l'autre dans une configuration assemblée de la tige 14, 314, 414 et de la sonde 18, 118, 218, 318, 418, 518, 618. Dans ladite configuration assemblée, les premier 20 et deuxième 54 axes sont confondus et la première face frontale 56 du corps de sonde 50, 150, 250, 350, 450 est appliquée contre la première 322, 422 ou la seconde 26 face plane de la tige 14, 314, 414. Les figures 4 et 5 représentent respectivement les configurations assemblées de la tige 314 avec la sonde 318 et de la tige 414 avec la sonde 418.

Les premier 29, 329, 429 et deuxième 62, 162, 362, 462, 562, 662 éléments de blocage permettent ainsi d'aligner les premier 20 et deuxième 54 axes dans la configuration assemblée.

La tige 14, 314, 414 et la sonde 18, 118, 218, 318, 418, 518, 618 sont mobiles en rotation l'une par rapport à l'autre entre la configuration assemblée et une configuration libre, dans laquelle les premier 29, 329, 429 et deuxième 62, 162, 362, 462, 562, 662 élément de blocage sont décalés angulairement l'un par rapport à l'autre. Dans ladite configuration libre, la tige 14, 314, 414 et la sonde 18, 118, 218, 318, 418, 518, 618 sont ainsi découplées mécaniquement l'une de l'autre.

Le transducteur 52, 452 comporte : un capteur 80 ; un module 82 électronique ; et un câble 84 de liaison.

Le capteur 80 est un émetteur-récepteur d'ultrasons, fixé sur la seconde face frontale 58, 258 du corps de sonde 50, 150, 250, 350, 450.

Dans le mode de réalisation de la figure 3, l'évidement 259 permet de disposer proches l'une de l'autre les première 56 et seconde 258 faces frontales du corps de sonde 250. Une telle configuration permet d'améliorer la transmission des ondes ultrasonores, comme décrit ci-après.

Optionnellement, l'évidement 259 peut être rempli, par exemple de résine conductrice époxy, pour ajuster l'amortissement et la bande passante du capteur 80. L'intégration du capteur 80 à l'intérieur du corps 250 permet d'assurer sa protection.

Le capteur 80 est de préférence un capteur piézoélectrique, apte à convertir un signal électrique reçu en onde ultrasonore émise, et apte à convertir une onde ultrasonore reçue en signal électrique émis. Le câble 84 de liaison relie électriquement le capteur 80 et le module 82 électronique. Le module 82 électronique est apte à émettre un premier signal électrique vers le capteur 80 et à analyser un deuxième signal électrique reçu dudit capteur 80.

Dans le mode de réalisation de la figure 2, le câble 84 de liaison traverse une paroi du support 164 tubulaire de la sonde 118. Le module 82 électronique n'est pas représenté sur les figures 2 à 5. Le câble 84 de liaison n'est pas représenté sur la figure 5.

Les modes de réalisation des figures 1 et 3 vont à présent être décrits plus précisément.

Dans le mode de réalisation des figures 1 et 3, le deuxième élément de blocage 62 de la sonde 18, 218 est un filetage apte à coopérer avec le taraudage formant le premier élément de blocage 29.

De même, dans une variante au mode de réalisation de la figure 2, le deuxième élément de blocage 162 est un filetage. Eventuellement, le pas d'un tel filetage est incomplet, pour un assemblage de type « quart de tour ».

Dans le cas où la tige 14 comporte la portion filetée 30, le filetage formant le deuxième élément de blocage 62, 162 peut être de même sens que celui de ladite portion filetée, ou encore de sens opposé.

Dans le mode de réalisation des figures 1 et 3, le filetage formant le deuxième élément de blocage 62 est ménagé sur le corps de sonde 50, 250. De préférence, ledit filetage 62 comporte plusieurs pas complets.

De manière optionnelle, la sonde 18, 118, 218 comprend en outre un élément 86 de préhension, permettant de visser le filetage 62, 162 dans la paroi taraudée 28 de l'empreinte 24 axiale. Dans les modes de réalisation des figures 1 et 3, l'élément de préhension comporte des oreilles 86 de préhension. L'élément 86 de préhension peut être formé par tout dispositif manuel ou par un outillage relié à une source d'énergie, apte à se relier au corps de la sonde et de l'entraîner en rotation dans les deux directions opposées. L'élément 86 de préhension peut être amovible ou fixé de manière permanente à la sonde.

Les modes de réalisation des figures 2, 4 et 5-7 vont à présent être décrits plus précisément.

Dans le mode de réalisation des figures 2, 4 et 5-7, la sonde 118, 318, 418, 518, 618 comporte en outre un support 164, 364, 464, 564, 664 tubulaire et un ressort 166, 366, 466.

Le support 164, 364, 464, 564, 664 tubulaire comprend une cavité 168, 368, 468 interne, s'étendant selon le deuxième axe 54 entre une première 170, 370, 470et une seconde extrémités. La première extrémité 170, 370, 470 est ouverte.

Le ressort 166, 366, 466 est un ressort de compression, disposé dans la cavité 168, 368, 468 selon le deuxième axe 54. Une première et une seconde extrémités du ressort 166, 366, 466 sont fixées respectivement : au corps de sonde 150, 350, 450 ; et au support 164, 364, 464, 564, 664, au niveau de la seconde extrémité de la cavité 168, 368, 468.

Le corps de sonde 150, 350, 450 est mobile en translation selon le deuxième axe 54, dans la cavité 168, 368, 468 du support 164, 364, 464, 564, 664.

Dans une première position, correspondant à un état de compression minimale du ressort 166, 366, 466, la première face frontale 56 du corps de sonde 150, 350, 450 est disposée hors de la cavité 168, 368, 468 et à une première distance 172 de la première extrémité 170, 370, 470. La première position est visible sur la figure 2.

Dans la configuration assemblée de la sonde 118, 318, 418, 518, 618 et de la tige 14, 314, 414, la première face frontale 56 du corps de sonde 150, 350, 450 est disposée à une deuxième distance de la première extrémité 170, 370, 470 de la cavité 168, 368, 468. Ladite deuxième distance, inférieure à la première distance 172, correspond à une deuxième position du corps de sonde 150, 350, 450 par rapport au support 164, 364, 464, 564, 664 selon le deuxième axe 54. Ladite deuxième position correspond à une compression du ressort 166, 366, 466 supérieure à celle de la première position.

Dans le mode de réalisation de la figure 2, le deuxième élément de blocage 162 de la sonde 118 comporte au moins deux ergots de baïonnette 163, chacun desdits ergots étant apte à coopérer avec l'un des deux crans à baïonnette formant le premier élément de blocage correspondant (non représenté) dans l'empreinte 24 de la tige 14. Lesdits ergots de baïonnette 163 sont solidaires du support 164 de la sonde 118, à proximité de la première extrémité 170 de la cavité 168, et s'étendent radialement à l'opposé du deuxième axe.

Dans le mode de réalisation de la figure 4, le deuxième élément de blocage 362 comporte au moins un ergot de blocage 363, ménagé sur le support 364 tubulaire de la sonde 318.

Plus précisément, le support 364 comprend : une portion principale 365 ; et au moins une languette flexible 367, s'étendant selon le deuxième axe 54 entre une première et une seconde extrémités. La première extrémité est fixée à la portion principale 365, la seconde extrémité porte le ou l'un des ergots de blocage 363.

De préférence, le support 364 comprend au moins deux languettes flexibles 367 et au moins deux ergots de blocage 363, répartis angulairement de manière régulière autour du deuxième axe 54.

Par ailleurs, dans le mode de réalisation de la figure 4, la sonde 318 comprend en outre un manchon 369, disposé autour du support 364 tubulaire et apte à coulisser axialement par rapport audit support. Le manchon 369 comprend au moins une lumière 371. De préférence, le manchon 369 comprend au moins deux lumières 371, réparties angulairement de manière régulière autour du deuxième axe 54.

Le support 364 tubulaire et le manchon 369 sont mobiles entre une conformation déployée, visible sur la figure 4, et une conformation rétractée. Dans la conformation déployée, le ou chaque ergot de blocage 363 est disposé dans la ou dans l'une des lumières 371 du manchon 369, en saillie radiale par rapport audit manchon et par rapport à la portion principale 365 du support 364. Dans la conformation rétractée, l'au moins un ergot de blocage 363 est axialement écarté de la lumière 371 correspondante et disposé à l'intérieur du manchon 369. Un coulissement axial du manchon 369 par rapport au support 364 permet de passer de la conformation déployée à la conformation rétractée et inversement.

Dans la configuration assemblée de la tige 314 et de la sonde 318, le support 364 tubulaire et le manchon 369 sont dans la conformation déployée et les ergots de blocage 363 sont disposés dans la gorge interne 329 annulaire de l'empreinte axiale 324 de la tige 314, de sorte à bloquer axialement la sonde 318 dans ladite empreinte axiale.

Les modes de réalisation des figures 5 à 7 vont à présent être décrits plus précisément.

Dans les modes de réalisation des figures 5 à 7, la première extrémité 470 ouverte du support 464, 564, 664 tubulaire de la sonde 418, 518, 618 comprend des deuxièmes éléments anti-rotation 474, aptes à coopérer mécaniquement avec les premiers éléments anti-rotation 435 de la tige 414 pour bloquer en rotation ladite tige par rapport à ladite première extrémité 470. De préférence, les deuxièmes éléments anti-rotation 474 présentent une forme complémentaire de la surface d'entraînement de la tête 434 de la tige 414. Dans le mode de réalisation représenté, les deuxièmes éléments anti-rotation 474 présentent sensiblement une forme à 12 pans, continue ou discontinue, ménagée dans une paroi interne de la première extrémité 470 ouverte du support 464, 564, 664.

Par ailleurs, dans les modes de réalisation des figures 5 à 7, le deuxième élément de blocage 462, 562, 662 comprend au moins un élément mobile 476, 576, 676. Plus précisément, ledit au moins un élément mobile 476, 576, 676 est apte à se déplacer radialement par rapport à la première extrémité 470 ouverte du support 464, 564, 664 tubulaire. Dans les modes de réalisation représentés, le deuxième élément de blocage 462, 562, 662 comprend plusieurs éléments mobiles 476, 576, 676, sensiblement identiques et répartis angulairement de manière régulière autour du deuxième axe 54.

Les éléments mobiles 476, 576, 676 sont aptes à se déplacer entre une position bloquée, notamment visible sur la figure 4, et une position débloquée. Dans la position bloquée, le ou chaque élément mobile 476, 576, 676 coopère mécaniquement avec le premier élément de blocage 429 de la tige 414, de sorte à bloquer axialement ladite tige par rapport au support 464, 564, 664. Dans la position débloquée, le ou chaque élément mobile 476, 576, 676 et ledit premier élément de blocage 429 sont à l'écart l'un de l'autre, la tige 414 étant libre en translation axiale par rapport à la première extrémité 470 ouverte du support 464, 564, 664.

Dans le mode de réalisation de la figure 5, les éléments mobiles 476 sont des billes. Dans le mode de réalisation de la figure 6, les éléments mobiles 576 sont des ergots, chaque ergot formant l'extrémité d'une languette flexible. Dans le mode de réalisation de la figure 7, les éléments mobiles 676 sont des éléments aptes à coulisser radialement par rapport au support 664.

Plus précisément, les sondes 418, 518 et 618 représentées sur les figures 5, 6 et 7 sont décrites dans le document WO2024110510 précité, en tant que dispositifs de serrage d'une fixation.

Un procédé de mise en œuvre du dispositif 10, 310, 410 ci-dessus va maintenant être décrit.

Selon un premier mode de réalisation, le procédé vise à contrôler la tension déjà existante dans la fixation 12, 312, 412. On considère que la fixation 12, 312, 412 forme l'assemblage structurel 36, 436 avec les éléments structurels 38 décrits ci-dessus.

Tout d'abord, le deuxième élément de blocage 62, 162, 362, 462, 562, 662 de la sonde 18, 118, 218, 318, 418, 518, 618 est assemblé au le premier élément de blocage 29, 329, 429 de la tige, de sorte à bloquer axialement la sonde par rapport à la tige. La première face frontale 56 du corps de sonde est ainsi appliquée contre l'une 26, 322, 422 des première et seconde faces planes de la tige avec une pression non nulle.

Par exemple, dans le mode de réalisation des figures 1 à 3, le filetage 62, 162 de la sonde 18, 118, 218 est assemblé à la paroi taraudée 28 de l'empreinte 24 de la tige 14. Un tel assemblage de la sonde 18, 118, 218 avec l'empreinte 24 de la tige 14 est par exemple réalisé à la main par un opérateur. La pression axiale entre la sonde 18, 118, 218 et le fond 26 de l'empreinte 24 permet une bonne transmission des ondes ultrasonores, même en l'absence de couplant de type gel à l'interface.

Lors de l'assemblage de la sonde 18, 118, 218, 318, 418, 518, 618 avec la tige 14, 314, 414, la couche de revêtement 60, 260 solide se déforme sous l'effet de la pression axiale, permettant un contact optimal entre ladite sonde et ladite tige. Si la sonde comporte un revêtement 260 de forme bombée, la malléabilité du revêtement permet de compenser les éventuels petits défauts d'alignement.

Dans le mode de réalisation des figures 1 et 3, la pression axiale est de préférence mise en œuvre en appliquant un couple de serrage sur le corps de sonde 50, 250 notamment à l'aide de l'élément 86 de préhension. Par exemple, un tel couple de serrage est appliqué à la main par l'opérateur.

Dans le mode de réalisation des figures 2, 4 et 5-7, dans la configuration assemblée de la sonde 118, 318, 418, 518, 618 et de la tige 14, 314, 414, le ressort 166, 366, 466 applique la pression non nulle entre le corps de sonde 150, 350, 450 et la première 322, 422 ou la seconde 26 face plane de la tige. Dans le mode de réalisation de la figure 2, il est donc inutile d'appliquer un couple de serrage important entre le support 164 et l'empreinte 24. Un assemblage de type baïonnette est ainsi suffisant, mais peut être remplacé par un assemblage de type filetage/taraudage comme précédemment décrit.

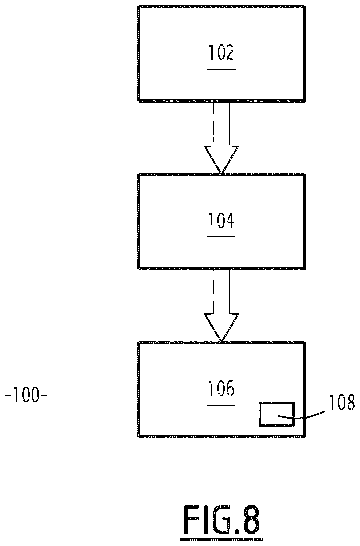

L'assemblage de la sonde 18, 118, 218, 318, 418, 518, 618 et de la tige 14, 314, 414 étant effectué, une phase 100 de mesure est mise en œuvre. Ladite phase 100 de mesure est représentée schématiquement sur la figure 8.

Lors d'une première étape 102 de la phase 100 de mesure, le transducteur 52, 452 génère des premières ondes ultrasonores, dites ondes ultrasonores émises, au niveau de la seconde face frontale 58, 258 du corps de sonde 50, 150, 250, 350, 450.

Plus précisément, lors de la première étape 102, le module 82 électronique émet un premier signal électrique vers le capteur 80 ; et ledit capteur 80 convertit ledit premier signal électrique en lesdites ondes ultrasonores émises.

Lors d'une deuxième étape 104 de la phase 100 de mesure, les ondes ultrasonores émises se propagent selon le deuxième axe 54 jusqu'à la première face frontale 56 du corps de sonde 50, 150, 250, 350, 450 puis dans la tige 14, 314, 414 selon le premier axe 20. Lesdites ondes ultrasonores sont ensuite réfléchies par la première 22 ou par la seconde 426 face plane de la tige 14, 314, 414, qui n'est pas en contact avec le corps de sonde. Il en résulte des deuxièmes ondes ultrasonores, dites ondes ultrasonores reçues, qui atteignent le capteur 80.

Avantageusement, une distance entre les première 56 et seconde 58, 258 faces frontales du corps de sonde 50, 150, 250, 350, 450 est choisie la plus faible possible, pour limiter d'éventuels phénomènes de résonance dans le corps de sonde.

Lors d'une troisième étape 106 de la phase 100 de mesure, les ondes ultrasonores reçues sont converties par le capteur 80 en un deuxième signal électrique, envoyé au module 82 électronique. Ledit module 82 électronique calcule alors une valeur 108 de la tension de serrage dans la tige 14, 314, 414, correspondant auxdites ondes ultrasonores reçues.

Ensuite, l'opérateur dissocie la sonde 18, 118, 218, 318, 418, 518, 618 et la tige 14, 314, 414, de sorte à récupérer ladite sonde.

Selon un deuxième mode de réalisation, le procédé de mise en œuvre du dispositif 10, 310, 410 vise à réaliser l'assemblage structurel 36, 436 en installant dans la fixation 12, 312, 412 une tension de serrage correspondant à une valeur cible.

Selon le deuxième mode de réalisation, la tige 14, 314, 414 est assemblée aux éléments structurels 38 avec la tête 34, 334, 434 venant au contact de la première face 40 ; et l'écrou 16 est engagé sur la portion filetée 30 tout en maintenant une distance non nulle avec la deuxième face 42.

La sonde 18, 118, 218, 318, 418, 518, 618 est ensuite assemblée à la tige 14, 314, 414, comme décrit ci-dessus. Plus précisément, dans les modes de réalisation des figures 1 à 3, la sonde 18, 118, 218 est assemblée à l'empreinte 24 de la tige 14, disposée du côté de la deuxième face 42 des éléments structurels 38 ; et dans les modes de réalisation des figures 4 à 7, la sonde 318, 418, 518, 618 est assemblée à la tête 334, 434 de la tige, disposée du côté de la première face 40 desdits éléments structurels

Puis une étape de serrage de l'écrou 16 est mise en œuvre, de manière à installer une tension de serrage dans la tige 14, 314, 414. Simultanément, la phase 100 de mesure précédemment décrite est mise en œuvre, afin de calculer une valeur 108 de ladite tension de serrage. Durant l'étape de serrage de l'écrou 16, la tige 14, 314, 414 est maintenue fixe en rotation et en translation par rapport aux éléments structurels 38.

Le serrage de l'écrou 16 est ensuite arrêté lorsque ladite valeur 108 atteint la valeur cible de tension de serrage.

La sonde 18, 118, 218, 318, 418, 518, 618 est ensuite dissociée de la tige 14, 314, 414.

Dans le deuxième mode de réalisation du procédé, la sonde 18, 118, 218 du dispositif 10 des figures 1 à 3 est préférentiellement incorporée à un outil ou à un automate d'installation (non représenté), qui réalise dans un premier temps l'assemblage de ladite sonde 18, 118, 218 à l'empreinte 24 de la tige 14, puis dans un deuxième temps le serrage de l'écrou 16. Un automate d'installation similaire est décrit dans la demande FR 22 12289 susmentionnée.

Dans le dispositif 410 des figures 5 à 7, comme indiqué ci-dessus, des dispositifs de serrage tels que décrits dans le document WO2024110510 peuvent être utilisés en tant que sondes 418, 518, 618. Dans le deuxième mode de réalisation du procédé, une telle sonde 418, 518, 618 est distincte de l'outil de serrage de l'écrou 16 mais est reliée électroniquement audit outil de serrage.

## Revendications

1. Dispositif (10, 310, 410) de contrôle du serrage d'une fixation (12, 312, 412), ledit dispositif comprenant :
- une tige (14, 314, 414), s'étendant selon un premier axe (20) ; la tige comprenant un élément (30) d'assemblage, disposé sur une première surface radiale de ladite tige ;
la tige comprenant une première (22, 322, 422) et une seconde (26, 426) faces planes, perpendiculaires au premier axe et disposées respectivement à une première et à une seconde extrémités de ladite tige ;
- un organe (16) d'assemblage, apte à s'assembler à l'élément d'assemblage (30) de la tige pour former la fixation (12, 312, 412) ; et
- une sonde (18, 118, 218, 318, 418, 518, 618) comprenant :
- un corps de sonde (50, 150, 250, 350, 450), comprenant une première face frontale (56), apte à venir au contact de la première (322, 422) ou de la seconde (26) face plane de la tige ; et
- un transducteur (52, 452, 80), solidaire du corps de sonde, ledit transducteur étant apte à envoyer et/ou à recevoir des ondes ultrasonores ;
la tige comportant un premier élément de blocage (29, 329, 429) ; et
la sonde (18, 118, 218, 318, 418, 518, 618) comportant un deuxième élément de blocage (62, 162, 362, 462, 562, 662), apte à coopérer mécaniquement avec ledit premier élément de blocage (29, 329, 429), de sorte à bloquer un déplacement axial de la sonde par rapport à la tige et à appliquer la première face frontale (56) du corps de sonde contre la première (322, 422) ou la seconde (26) face plane de la tige.

2. Dispositif de contrôle selon la revendication 1, comprenant en outre une couche de revêtement (60, 260) solide sur la première face frontale (56) du corps de sonde, ledit revêtement étant apte à améliorer une transmission acoustique entre le corps de sonde (50, 150, 250, 350, 450) et la tige (14, 314, 414).

3. Dispositif de contrôle selon la revendication 1 ou 2, dans lequel le corps de sonde (50, 150, 250, 350, 450) s'étend selon un deuxième axe (54) entre la première (56) et une seconde (58, 258) faces frontales, chacune desdites faces frontales étant plane et perpendiculaire au deuxième axe, le transducteur (52, 452, 80) étant au contact de la seconde face frontale.

4. Dispositif de contrôle selon la revendication 3, dans lequel le transducteur (52, 452) comprend un capteur (80) piézoélectrique, fixé sur la seconde face frontale (58, 258) du corps de sonde (50, 150, 250, 350, 450).

5. Dispositif de contrôle selon la revendication 3 ou 4, dans lequel la seconde face frontale (258) du corps de sonde (250) est formée par le fond d'un évidement (259) ménagé dans le corps de sonde.

6. Dispositif de contrôle selon l'une des revendications précédentes, dans lequel la sonde (118, 318, 418, 518, 618) comporte en outre : un support (164, 364, 464, 564, 664) tubulaire, comprenant une extrémité (170, 370, 470) ouverte sur une cavité (168, 368, 468) axiale ; et un ressort (166, 366, 466) de compression, disposé dans ladite cavité axiale, une première et une seconde extrémités du ressort étant fixées respectivement au corps de sonde (150, 350, 450) et au support tubulaire ; le corps de sonde étant mobile en translation dans la cavité axiale du support tubulaire ; et dans lequel le deuxième élément de blocage (162, 362, 462, 562, 662) est porté par le support tubulaire.

7. Dispositif (10, 310) de contrôle selon l'une des revendications précédentes, dans lequel : la tige comporte une empreinte (24, 324) axiale, disposée à l'une des première et seconde extrémités de ladite tige ; la première (322) ou la seconde (26) face plane de la tige est formée par un fond de ladite empreinte axiale ; et le premier élément (29, 329) de blocage est porté par l'empreinte axiale.

8. Dispositif (10) de contrôle selon la revendication 7, dans lequel les premier (29) et deuxième (62) éléments de blocage sont respectivement un taraudage et un filetage.

9. Dispositif (10) de contrôle selon la revendication 8, dans lequel le filetage (62) de la sonde (18, 218) est porté par le corps de sonde (50, 250).

10. Dispositif de contrôle selon la revendication 7, dans lequel les premier et deuxième (162) éléments de blocage comportent respectivement un cran de baïonnette et un ergot (163) de baïonnette.

11. Dispositif (310) de contrôle selon la revendication 6 prise en combinaison avec la revendication 7, dans lequel :
- les premier et deuxième (362) éléments de blocage comportent respectivement : une gorge interne (329), ménagée dans l'empreinte axiale (324) de la tige (314) ; et au moins un ergot de blocage (363), ménagé sur le support (364) tubulaire de la sonde (318) ;
- le support (364) tubulaire de la sonde comprend au moins une languette (367) flexible, la ou chaque languette flexible portant le ou l'un des ergots de blocage (363) ;
- la sonde comprend en outre un manchon (369) disposé autour du support tubulaire et apte à coulisser axialement par rapport audit support tubulaire, le manchon comprenant au moins une lumière (371) ; et
- le support tubulaire et le manchon sont mobiles entre une conformation rétractée, dans laquelle l'au moins un ergot de blocage (363) est disposé à l'intérieur du manchon (369), et une conformation déployée, dans laquelle le ou chaque ergot de blocage est disposé dans la ou dans l'une des lumières (371) du manchon et en saillie radiale par rapport audit manchon ;
le dispositif étant configuré de sorte que, dans la conformation déployée, le ou les ergots de blocage (363) sont aptes à être disposés dans la gorge interne (329) de l'empreinte axiale (324) de la tige (314), de sorte à bloquer axialement la sonde dans ladite empreinte axiale.

12. Dispositif (410) de contrôle selon l'une des revendications 1 à 4, dans lequel la tige (414) comprend une deuxième surface radiale (431) externe, disposée autour du premier axe (20) ; ladite surface radiale comprenant le premier élément de blocage (429) et des premiers éléments anti-rotation (435).

13. Dispositif de contrôle selon la revendication 12 prise en combinaison avec la revendication 6, dans lequel :
- l'extrémité ouverte (470) du support (464, 564, 664) tubulaire de la sonde (418, 518, 618) comprend des deuxièmes éléments anti-rotation (474), aptes à coopérer mécaniquement avec les premiers éléments anti-rotation (435) pour bloquer en rotation la tige (414) par rapport à ladite extrémité ouverte ; et
- le deuxième élément de blocage (462, 562, 662) comprend au moins un élément mobile (476, 576, 676) radialement par rapport à ladite extrémité ouverte (470), entre une position bloquée, dans laquelle ledit élément mobile coopère mécaniquement avec le premier élément de blocage (429), et une position débloquée, dans laquelle ledit élément mobile et ledit premier élément de blocage sont à l'écart l'un de l'autre.

14. Procédé de contrôle du serrage d'une fixation (12, 312, 412), mis en œuvre au moyen d'un dispositif (10, 310, 410) de contrôle selon l'une des revendications précédentes, ledit procédé comprenant :
- une phase d'assemblage, comprenant : l'assemblage de la tige (14, 314, 414) et de l'organe (16) d'assemblage avec des éléments (36) de structure pour former la fixation (12, 312, 412), une tension de serrage étant appliquée dans la tige ; et l'assemblage du deuxième élément de blocage (62, 162, 362, 462, 562, 662) de la sonde (18, 118, 218, 318, 418, 518, 618) avec le premier élément de blocage (29, 329, 429) de la tige, de sorte à bloquer axialement la sonde par rapport à la tige et à appliquer la première face frontale (56) du corps de sonde contre l'une (26, 322, 422) des première et seconde faces planes de la tige avec une pression non nulle ; et
- une phase (100) de mesure de la tension (108) de serrage, comprenant : la génération (102), par le transducteur (52, 452, 80), d'ondes ultrasonores émises ; la réception (104), par ledit transducteur, d'ondes ultrasonores réfléchies par l'autre (22, 426) des première et seconde faces planes de la tige ; et le traitement (106) des ondes ultrasonores reçues pour calculer la tension de serrage dans la tige.

15. Procédé de contrôle selon la revendication 14, dans lequel : l'élément d'assemblage (30) de la tige est une portion filetée, disposée à la seconde extrémité de ladite tige ; et l'organe (16) d'assemblage est un écrou ; et dans lequel l'assemblage de la tige (14, 314, 414) et de l'organe d'assemblage comprend une étape de serrage de l'écrou (16) sur la portion filetée (30) de la tige ; la phase de mesure de la tension de serrage est réalisée simultanément à ladite étape de serrage ; et le serrage de l'écrou (16) est arrêté lorsqu'une valeur cible de la tension de serrage est atteinte.
